# EUROPEAN PATENT APPLICATION

(11) **EP 2 354 540 A1**
(43) Date of publication of application: **10.08.2011**
(21) Application number: 10195037.6
(22) Date of filing: 15.12.2010
(51) Int. Cl.: F03D 7/02, F03D 1/00, F03D 9/02, F03D 11/02

(54) **Wind turbine brake power generation**

(30) Priority: 31.12.2009 US 650786
(71) Applicant: General Electric Company, Schenectady, NY 12345 (US)
(72) Inventor: Bagepalli, Bharat S., Schenectady, NY 12345 (US); Gadre, Aniruddha D., Schenectady, NY 12345 (US)
(74) Representative: Bedford, Grant Richard

(57) **Abstract**

A wind turbine 2, includes a tower 4 for supporting a nacelle 6; a gearbox 14 connected to an electrical generator 16 arranged in the nacelle 6; a plurality of blades 10 for rotating the gearbox 14 and driving the generator 16; a brake disk 102 for stopping rotation of at least one of the gearbox 14 and the generator 16; and an auxiliary power source 104, 106, driven by the brake disk 102, for generating power.

## Description

The subject matter described here generally relates to wind turbines, and, more particularly, to power generation using a wind turbine brake.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

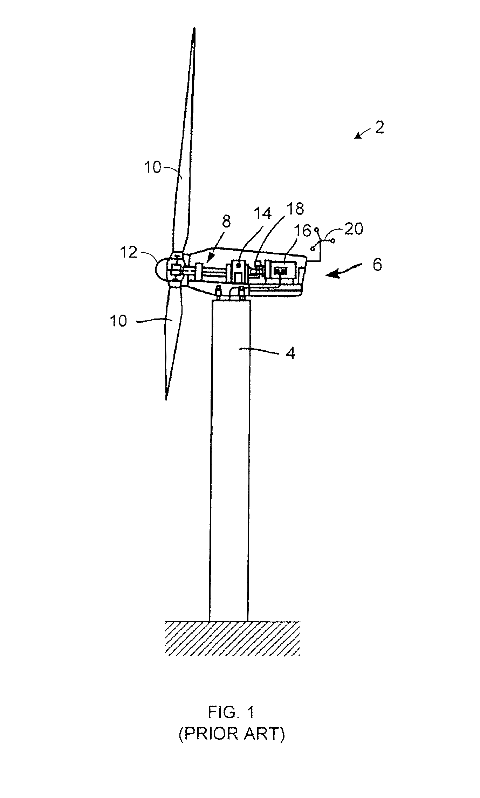

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub 12 to form a "rotor" at one end of the drive train 8 outside of the nacelle 6. The rotating blades 10 drive a gearbox 14 connected to an electrical generator 16 at the other end of the drive train 8 inside the nacelle 6. A control system 18 receives input from an anemometer 20 and/or other sensors to control the operation of the wind turbine 2.

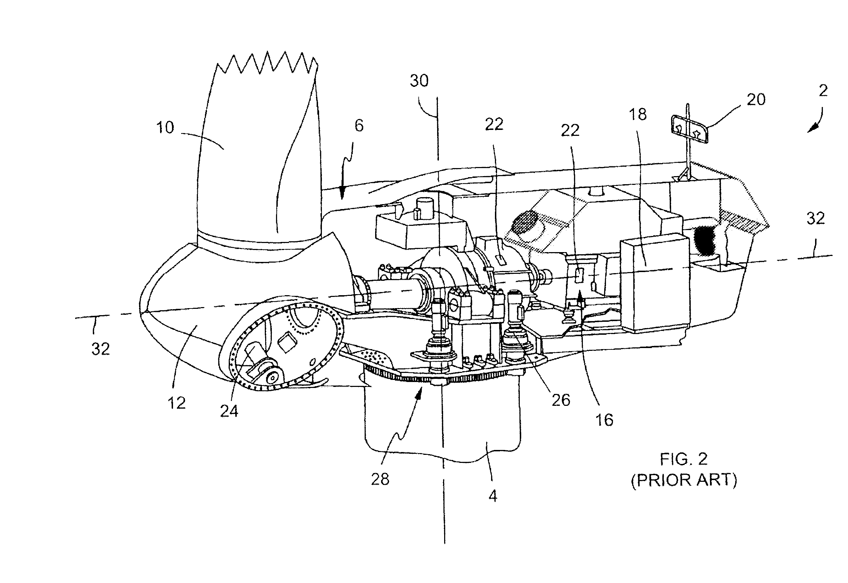

FIG. 2 is an enlarged cut-away view of a top portion of the wind turbine 2 shown in FIG. 1 and is partially reproduced from commonly-assigned U.S. Patent No. 7,488,155 entitled "Methods and Apparatus for Wind Turbine Braking." In FIG. 2, the control system 18 includes one or more controllers within a control panel for monitoring the anemometer 20 and/or various other sensors 22 for managing various aspects of the turbine operation. For example, the control system 18 may provide signals to the variable blade pitch actuators 24 that adjust the pitch of blades 10. Similarly, the control system 18 may also provide control signals to the yaw drive actuators 26 that engage the yaw deck 28 and rotate the nacelle 6 about the yaw axis 30 which is substantially perpendicular to the rotor axis 32.

The wind turbine 2 typically has numerous devices that are powered by batteries in order to operate during a power outage. Recharging those batteries is generally not possible if the turbine 2 is spinning freely but not generating power, such as when idling or coming up to speed during a cold start. Wind turbines 2 also generally include redundant braking systems for locking the drive train 8 and/or blades 10. At least one of those braking systems typically includes a brake disk capable of stopping the turbine 2 against full wind torque. These wind turbine braking systems often further include a hydraulic accumulator, spring, or other energy storage device that enables operation of the brake in the event of a power failure.

Various aspects associated with such conventional approaches are addressed herein by providing, in various embodiments, a wind turbine including a tower for supporting a nacelle; a gearbox connected to an electrical generator arranged in the nacelle; a plurality of blades for rotating the gearbox and driving the generator; a brake disk for stopping rotation of at least one of the gearbox and the generator; and an auxiliary power source, driven by the brake disk, for generating power.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind generator.
FIG. 2 is a partial cutaway view of the upper portion of the wind turbine shown in FIG. 1.
FIG. 3 is a schematic view of a gearbox system for use with the wind turbine shown in FIGs. 1 and 2.
FIG. 4 is a schematic view of a gearbox system for use with the wind turbine shown in FIGs. 1 and 2.
FIG. 5 is a schematic view of a gearbox system for use with the wind turbine shown in FIGs. 1 and 2.

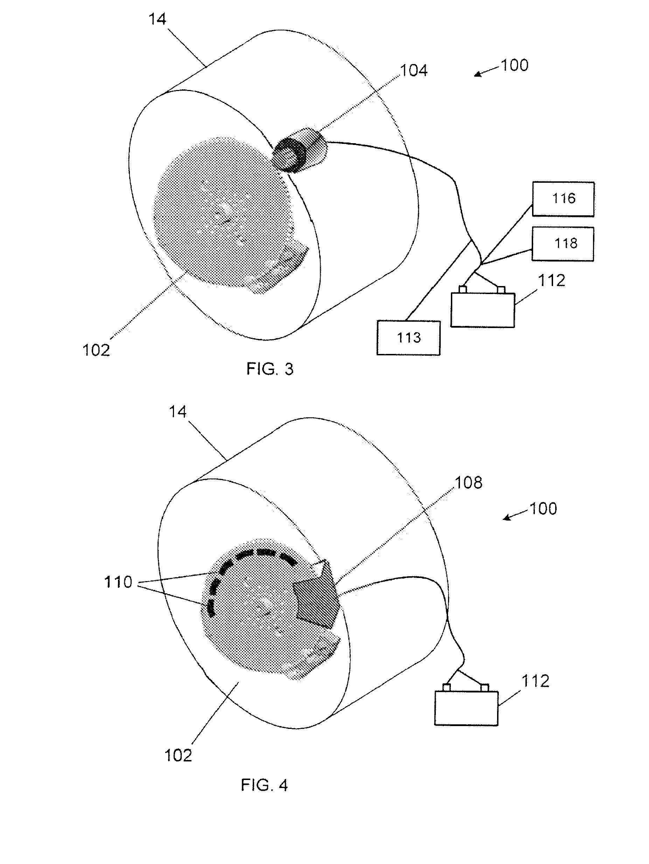

FIGs. 3 through 5 are schematic views of a gearbox system 100 including a gearbox 14 and various auxiliary power sources and power storage devices. The gearbox system 100 may be used with the wind turbine 2 shown in FIGs. 1 and 2 and/or any other on-shore or off-shore wind turbine or other device utilizing a suitable gearbox 14. For example, the gearbox 14 of the gearbox system 100 may be connected to the generator 16 arranged on the tower 4 as shown in FIGs. 1 and 2.

The gearbox 14 has a brake disk 102 that is activated by a brake (not shown) for stopping rotation of the gearbox 14. The brake disk 102 illustrated here is arranged on the high-speed side of the gearbox 14, between the gearbox 14 and the (main) generator 16. The brake disk 102 is typically attached to the shaft of the gearbox 14, but may alternatively be attached on the generator side of the gearbox 14. Other brake disk arrangements are also possible.

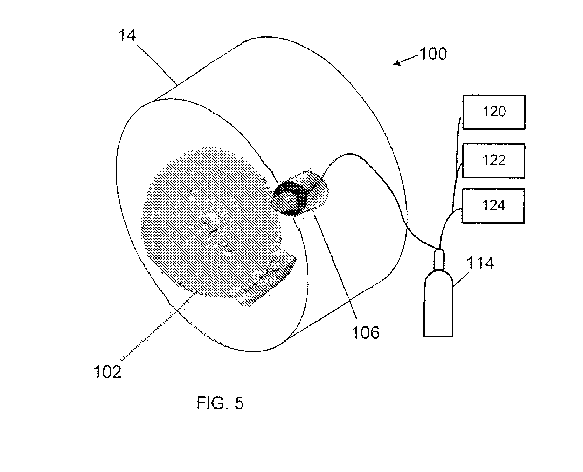

One or more auxiliary power sources may be mounted on or near the main gearbox 14 and driven by the brake disk 102 in order to generate power. For example, the auxiliary power source may include an alternator or second (auxiliary) generator 104 as shown in FIGs. 3 and 4, or a compressor 106 as shown in FIG. 5. The second generator 104, compressor 106, and/or other auxiliary power sources may also be provided on the same gearbox system 100.

In FIGs. 3 and 5, the second generator 104 or compressor 106 (respectively) directly engage the brake disk 102. In these examples, both of the second generator 104 and compressor 106 have a pinion on its shaft that engages gear teeth on the brake disk 102. However, the second generator 104 and/or compressor 106 may also be driven by other devices that engage the brake disk 102 such as a gears, wheels, chains, belts, couplings, clutches, and/or other devices. The engagement can be made by a permanent fixture, or alternatively, one that is engaged only as needed.

As illustrated in the embodiment shown in FIG. 4, the second generator 104 may include an armature 108 that surrounds a portion of the brake disk 102 having a magnetic field inducer such as permanent magnets 110 or field coils (not shown). In this case, the brake disk 102 does not require teeth. The positions of the armature 108 and permanent magnets 110 may also be reversed. Power from one auxiliary power source may also be use to drive another auxiliary power source. For example, compressed air from the compressor 106 may be used to run an air-motor that can drive a third generator and/or other devices.

A power storage device may be connected to any or all of the auxiliary power sources for receiving and storing power from those power sources. For example, as illustrated in FIGs. 3 and 4, one or more batteries 112, capacitors 113 (such as ultracapacitors), and/or other energy storage devices may be connected to the second generator 104 for receiving and storing electricity from the second generator 104. Similarly, as illustrated in FIG. 5, one or more gas cylinders 114 or other reservoirs may be connected to the compressor 106 for receiving and storing air or other pressurized fluids from the compressor 106. Energy from these power storage devices can then be used for a variety of tasks. For example, energy from the battery 112 may be used to power pitch control actuators 24 or 116, heaters, such as gearbox oil heater 118, and/or other auxiliary devices. Similarly, energy from the gas cylinder 114 may be used to power air motors 120, battery chargers 122, hand power tools 124 and/or other devices. Energy may also be provide directly to such loads from the second generator 104 and/or compressor 106.

The technology disclosed above offers various advantages over conventional approaches. For example, the auxiliary power sources draw minimal torque from the brake disk 102 wheel, the majority of which is then fed into the generator 16 that produces power for the grid. These auxiliary power sources can provide power even when the generator 16 is off-line. Where the output of the second generator 104 is used to recharge batteries, this stored energy can later be used to provide power for various purposes including pitch control actuators 24 or 116 and gearbox oil heating 118. Such heating is particularly important in getting the wind turbine 2 for power production during extreme cold weather and could therefore help to quickly bring the wind turbine 2 to power production and thus increased the overall power production of the turbine 2. Where the output of the compressor 106 is used to compress air, this stored energy can later be used to power hand tools that are used for maintain the wind turbine 2. Since compressed air-powered hand tools 124 are relatively light weight, this aspect of the disclosure avoids the need to manually carry heavy tools up the tower 4 into a nacelle 6.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are defined by the following numbered clauses:
1. A wind turbine, comprising:
   a tower for supporting a nacelle;
   a gearbox connected to an electrical generator arranged in the nacelle;
   a plurality of blades for rotating the gearbox and driving the generator;
   a brake disk for stopping rotation of at least one of the gearbox and the generator; and
   an auxiliary power source, driven by the brake disk, for generating power.
2. The wind turbine recited in clause 1, wherein the auxiliary power source comprises a second generator.
3. The wind turbine recited in any preceding clause, wherein the second generator engages the brake disk.
4. The wind turbine recited in any preceding clause, wherein one of the second generator and the brake disk comprises an armature and another of the second generator and the brake disk comprises a magnetic field inducer.
5. The wind turbine recited in any preceding clause, wherein the second generator comprises an armature and the brake disk comprises at least one permanent magnet.
6. The wind turbine recited in any preceding clause, wherein the auxiliary power source comprises a compressor.
7. A wind turbine, comprising:
   a tower for supporting a nacelle;
   a gearbox connected to an electrical generator arranged in the nacelle;
   a plurality of blades for rotating the gearbox and driving the generator;
   a brake disk for stopping rotation of at least one of the gearbox and the generator;
   an auxiliary power source, driven by the brake disk, for generating power; and
   a power storage device, connected to the auxiliary power source, for receiving and storing power from the auxiliary power source.
8. The wind turbine recited in any preceding clause, wherein the power storage device comprises at least one of the group consisting of a battery and a capacitor.
9. The wind turbine recited in any preceding clause, wherein the power storage device comprises a gas cylinder.
10. The wind turbine recited in any preceding clause, wherein the auxiliary power source comprises a second generator.
11. The wind turbine recited in any preceding clause, wherein the second generator engages the brake disk.
12. The wind turbine recited in any preceding clause, wherein one of the second generator and the brake disk comprises an armature and another of the second generator and the brake disk comprises a magnetic field inducer.
13. The wind turbine recited in any preceding clause, wherein the second generator comprises an armature and the brake disk comprises at least one permanent magnet.
14. The wind turbine recited in any preceding clause, wherein the auxiliary power source comprises a compressor.
15. A gearbox system, comprising:
   a brake disk; and
   an auxiliary power source, driven by the brake disk, for generating power.
16. The gearbox system recited in any preceding clause, wherein the power source is selected from the group consisting of a generator and a compressor.
17. The gearbox system recited in any preceding clause, further comprising a power storage device, connected to the auxiliary power source, for receiving and storing power from the auxiliary power source.
18. The gearbox system recited in any preceding clause, wherein the power storage device is selected from the group consisting of a source is selected from the group consisting of a battery, a capacitor, and a gas cylinder.
19. The gearbox system recited in any preceding clause, further comprising a power storage device, connected to the auxiliary power source, for receiving and storing power from the auxiliary power source.
20. The gearbox system recited in any preceding clause, wherein the power storage device is selected from the group consisting of a source is selected from the group consisting of a battery, capacitor, and a gas cylinder.

## Claims

1. A wind turbine (2), comprising:
a tower (4 ) for supporting a nacelle (6);
a gearbox (14) connected to an electrical generator (16) arranged in the nacelle (6);
a plurality of blades (10) for rotating the gearbox (14) and driving the generator (16);
a brake disk (102) for stopping rotation of at least one of the gearbox (14) and the generator (16); and
an auxiliary power source (104,106), driven by the brake disk (102), for generating power.

2. The wind turbine (2) recited in claim 1, wherein the auxiliary power source comprises a second generator (104).

3. The wind turbine (2) recited in claim 2, wherein the second generator (104) engages the brake disk (102).

4. The wind turbine (2) recited in claim 2 or 3, wherein one of the second generator (104) and the brake disk (106) comprises an armature (108) and another of the second generator and the brake disk comprises a magnetic field inducer (110).

5. The wind turbine (2) recited in claim 2, 3, or 4, wherein the second generator (104) comprises an armature (108) and the brake disk (106) comprises at least one permanent magnet (110).

6. The wind turbine (2) recited in any preceding claim, wherein the auxiliary power source comprises a compressor (106).

7. A gearbox system (100), comprising:
a brake disk (102); and
an auxiliary power source (104,106), driven by the brake disk (102), for generating power.

8. The gearbox system (100) recited in claim 7, wherein the power source is selected from the group consisting of a generator (104) and a compressor (106).

9. The gearbox system (100) recited in claim 7 or 8, further comprising a power storage device (112,114), connected to the auxiliary power source (104,106), for receiving and storing power from the auxiliary power source (104,106).

10. The gearbox system (100) recited in claim 9, wherein the power storage device (112,114) is selected from the group consisting of a source is selected from the group consisting of a battery (112), a capacitor, and a gas cylinder (114).
